# EUROPÄISCHE PATENTSCHRIFT

(11) **EP 4 303 085 B1**
(45) Veröffentlichungstag und Bekanntmachung des Hinweises auf die Patenterteilung: **18.09.2024**
(21) Anmeldenummer: 22183440.1
(22) Anmeldetag: 06.07.2022
(51) Int. Cl.: B60T 13/36, B60T 13/38, B60T 13/68

(54) **ARBEITSMASCHINE, DIAGNOSEVERFAHREN UND VERWENDUNG DER ARBEITSMASCHINE**
WORK MACHINE, DIAGNOSTIC PROCEDURE AND USE OF THE WORK MACHINE
MACHINE DE TRAVAIL, PROCÉDURE DE DIAGNOSTIC ET UTILISATION DE LA MACHINE DE TRAVAIL

(43) Veröffentlichungstag der Anmeldung: 10.01.2024
(73) Patentinhaber: KAMAG Transporttechnik GmbH & Co. KG, 89079 Ulm (DE)
(72) Erfinder: Riedel, Gerald, 89233 Ulm (DE)
(74) Vertreter: Ullrich & Naumann PartG mbB

(56) Entgegenhaltungen:
- WO-A1-2018/172319
- DE-A1- 102009 031 743
- DE-A1- 102010 014 306

## Beschreibung

### Technisches Gebiet

Die vorliegende Erfindung betrifft das technische Gebiet der Logistik und insbesondere eine Arbeitsmaschine gemäß Anspruch 1, ein Diagnosesystem für eine solche Arbeitsmaschine gemäß Anspruch 9 sowie eine Verwendung einer solchen Arbeitsmaschine gemäß Anspruch 12.

### Stand der Technik

Der sichere Betrieb von Arbeitsmaschinen wie Flurförderfahrzeugen muss jederzeit gewährleistet sein. Dies gilt insbesondere für ein rasches Abbremsen oder Ausweichen vor Hindernissen unter räumlich eingeschränkten Umgebungen wie Logistikhöfen. Ein vom Bediener eines Flurförderfahrzeugs eingeleitetes Brems- oder Ausweichmanöver sollte möglichst schnell und wirkungsvoll durchführbar sein, um Kollisionen zu vermeiden. Dies gilt umso mehr für fahrerlose Arbeitsmaschinen, die völlig eigenständig operieren und damit erhöhten Sicherheitsanforderungen unterliegen. In diesem Zusammenhang ist insbesondere die Erkennung von Personen von Bedeutung, die sich im Umfeld der Arbeitsmaschine bewegen.

Fahrerlose Arbeitsmaschinen wie Flurförderfahrzeuge müssen Personen sicher erkennen und durch eine unmittelbar eingeleitete Bremsung so zum Stillstand kommen, dass die detektierte Person nicht verletzt wird. Als sicher gelten dabei nach der Flurförderfahrzeug-Norm "DIN EN ISO 3691-4:2020, Flurförderfahrzeuge - Sicherheitstechnische Anforderungen und Verifizierung, Teil 4: Fahrerlose Flurförderfahrzeuge und ihre Systeme" Bremssysteme, welche einen Performancelevel (PL) d erreichen. Wie ein Steuerungssystem einen PL d erreichen kann, ist in der Norm "DIN EN ISO 13849-1:2015, Sicherheit von Maschinen, Sicherheitsbezogenen Steuerungen, Teil 1: Allgemeine Gestaltungsgrundsätze" definiert.

Ziel eines solchen Bremssystems ist es zusätzlich, zu der zu erreichenden Zuverlässigkeit PL d auch einen möglichst kurzen Bremsweg und damit höhere Fahrgeschwindigkeiten für einen effizienteren Einsatz solcher fahrerlosen Systeme zu realisieren. Der einzuhaltende Bremsweg selbst ergibt sich aus der Reichweite der Sensorik zur sicheren Erkennung von Personen, der Fahrbahn bzw. Untergrundbeschaffenheit, den Witterungsbedingungen, der Geschwindigkeit und der Bremskraft. Die aktuell verfügbaren Personenerkennungs-Sensoren für Anwendungen im Außenbereich, welche die Anforderungen der DIN EN ISO 13849 sowie der DIN EN ISO 3691-4 erfüllen, weisen leider nur Reichweiten bis zirka 4 m auf.

Unter diesen Bedingungen ist mit den bestehenden Bremssystemen aber keine Erhöhung der Fahrgeschwindigkeiten von Arbeitsmaschinen erzielbar.

WO 2018/172319 A1 und DE 102009031743 A1 offenbaren Fahrzeuge mit Betriebsbremsen und federspeicherbetriebene Parkbremsen, die an den Rädern der Vorderachse bzw. der Hinterachse des Fahrzeugs vorgesehen sind.

### Aufgabe der Erfindung

Es ist eine Aufgabe der Erfindung, die vorstehenden Probleme zu lösen und ein Bremssystem bereitzustellen, das eine Erhöhung der Fahrgeschwindigkeiten von Arbeitsmaschinen erlaubt, und das konstruktiv einfach aufgebaut und kostengünstig umsetzbar ist.

### Lösung der Aufgabe

Die vorliegende Erfindung geht davon aus, dass Arbeitsmaschinen wie Flurförderfahrzeuge in der Regel pneumatische oder hydraulische Betriebsbremsen haben. Zusätzlich benötigen sie eine Parkbremse zum sicheren Abstellen des Fahrzeugs. Diese darf auf Grund von Leckagen bzw. Druckverlusten nicht versagen. Aus diesem Grund werden zum Abstellen einige Bremsachsen der Arbeitsmaschine mit einem Federspeichersystem und somit in der Regel mit kombinierten Bremszylindern - einer Kammer mit Membranzylinder für Betriebsbremse und einer Kammer mit Membran und Feder für Parkbremse - ausgerüstet. Bei Betätigung der Parkbremse wird der Druck in der Kammer des Federspeichers abgelassen, die Feder entspannt sich und betätigt so die Bremse. Aufgrund der höheren Kosten für einen kombinierten Zylinder werden nur so viele Achsen damit ausgerüstet, wie unbedingt nötig.

### - Abbremsen über die Betriebsbremse

Für die sicheren Notbremssysteme wird bei Flurförderzeugen aktuell entweder auf die Betriebsbremse, die Parkbremse, oder eine Kombination aus beiden zurückgegriffen. Federspeichersysteme eignen sich aufgrund der schlechteren Dosierbarkeit und schlechteren Reaktionsgeschwindigkeit nur sehr eingeschränkt als Betriebsbremse. Eine sichere Abbremsung über die Betriebsbremse wird entweder über Ventile oder einer mechanischen Betätigung des Bremspedals erreicht. Es werden auf diese Weise alle Bremsachsen über die Betriebsbremse angesteuert und somit sollte die maximale Bremskraft erreicht werden, jedoch kann ein plötzlicher, unbemerkter Druckverlust im Bremssystem oder ein zu geringer Druck in den Energiespeichern zu einer im Notfall nicht ausreichenden Bremswirkung führen. Außerdem besteht die Gefahr, dass ein Schlauch an einer Bremsachse defekt geht und die Bremswirkung somit reduziert wird. In beiden Fällen verlängert sich der Bremsweg. Bei dieser Methode ist zudem nicht sichergestellt, dass die Bremskraft auch bei längerem Stillstand gewährleistet ist. Durch Druckverlust kann es zu einem Versagen der Betriebsbremse und zu einem unkontrollierten Wegrollen kommen. Es müssen deshalb weitere, sichere Maßnahmen getroffen werden.

### - Abbremsen über eine Kombination aus Betriebs- und Parkbremse

Eine Kombination aus Betriebsbremse und Parkbremse ist so aufgebaut, dass diese eine Redundanz aufweist. Beim Versagen der Betriebsbremse dient die Parkbremse als redundantes System und umgekehrt. Da nicht alle Achsen mit kombinierten Zylindern ausgerüstet sind, kann für den Bremsweg nicht die maximale Bremskraft angesetzt werden. Es muss deshalb vom längsten Bremsweg ausgegangen werden, welcher bei Ausfall eines der beiden Bremssysteme (Federspeicher- oder Betriebsbremse) erreicht wird. Die maximale Geschwindigkeit des Fahrzeugs ist darauf anzupassen bzw. zu reduzieren.

### - Abbremsen über die Parkbremse

Beim sicheren Abbremsen über die Parkbremse kann davon ausgegangen werden, dass die maximale Bremskraft, welche das Parkbremssystem leisten kann, immer erreicht wird. Energie- bzw. Druckverluste spielen keine Rolle, da die Bremskraft allein über Federn realisiert wird. Auch Ausfälle durch defekte Schläuche sind deshalb ausgeschlossen. Da jedoch nicht alle Achsen mit einem solchen System ausgerüstet sind, reduziert sich die maximal mögliche Bremskraft des Flurförderzeugs auf die Kraft der mit kombinierten Zylindern ausgerüsteten Achsen. Auch bei diesem System ist der Bremsweg nicht optimal, die Geschwindigkeit muss reduziert und dem Bremsweg angepasst werden.

Abweichend von den vorstehenden Bremsszenarien wird die vorstehende Aufgabe durch eine Arbeitsmaschine, insbesondere ein Flurförderfahrzeug, nach Anspruch 1 nun derart gelöst, mit mindestens zwei druckluftbetriebenen Betriebsbremsen und mindestens zwei federspeicherbetriebenen Parkbremsen, bei dem die Betriebs- und Parkbremsen wenigstens an Rädern einer Vorderachse der Arbeitsmaschine angebracht sind, und die Betriebs- und Parkbremsen in Ansprechen auf ein Notbremssignal einer Steuerungseinheit der Arbeitsmaschine auslösbar sind, wobei die mindestens zwei Parkbremsen über jeweils wenigstens zwei fluidisch in Reihe geschaltete Entlüftungsventile drucklos schaltbar sind.

Ein wesentlicher Punkt der erfindungsgemäßen Arbeitsmaschine besteht dabei darin, dass die druckluftbetriebenen Betriebsbremsen und die federspeicherbetriebenen Parkbremsen zwar nicht notwendigerweise allein dort, jedenfalls aber an den Rädern der Vorderachse eingesetzt und wenigstens die federspeicherbetriebenen Parkbremsen im Notfall ausgelöst werden. Durch das beim Abbremsen der Vorderachsräder auftretende starke Nickmoment der Arbeitsmaschine ist eine besonders starke Bremsleistung durch erhöhten Fahrrbahnwiderstand erzielbar, die im Fall der Parkbremsen zudem durch in Reihe geschaltete Entlüftungsventile äußerst zuverlässig auslösbar ist. Da jedes Entlüftungsventil für sich die Druckleitung öffnet, kann selbst bei Ausfall eines der Entlüftungsventile eine sichere Auslösung einer Parkbremse erfolgen. Natürlich können die beiden Bremssysteme auch an Rädern weiterer Achsen der Arbeitsmaschine ausgeführt und durch ein Notbremssignal auslösbar sein, idealerweise an allen Achsen. Wesentlich ist aber deren Platzierung an der Vorderachse samt sicherer Auslösung durch redundante Entlüftung.

### Bevorzugte Ausführungsformen der erfindungsgemäßen Arbeitsmaschine

Bevorzugte Ausführungsformen der erfindungsgemäßen Arbeitsmaschine sind in den Unteransprüchen angegeben.

In einer bevorzugten Ausführungsform der erfindungsgemäßen Arbeitsmaschine ist es danach vorgesehen, dass diese mit wenigstens einem achsweisen Überlastschutzventil zur direkten - also achsnahen und damit besonders schnellen - Entlüftung der mindestens zwei Parkbremsen ausgestattet ist, das bei Ansteuerung durch die Entlüftungsventile verhindert, dass eine maximal zulässige Bremskraft pro Rad nicht überschritten wird. Die Entlüftungsventile steuern dabei die Überlastschutzventile pneumatisch an; eine dadurch ausgelöste Entlüftung der federspeicherbetriebenen Parkbremsen erfolgt dabei achsnah direkt am Überlastschutzventil. Durch die schnelle Entlüftung des einer betreffenden Bremsachse direkt zugeordneten Überlastschutzventils ist ein rasches Auslösen dort angeordneter Parkbremsen möglich.

Gleichzeitig reduziert das Überlastschutzventil die Bremskraft der Parkbremse um den Kraftanteil, welchen eine gleichzeitig aktive Betriebsbremse erzeugt. Dies ist insbesondere deshalb wichtig, weil ein gemeinsames Anschlagen von Betriebs- und Parkbremse ansonsten zu einer Überlastung der Radbremsen führen könnten.

In einer weiteren bevorzugten Ausführungsform der erfindungsgemäßen Arbeitsmaschine ist es vorgesehen, dass die Arbeitsmaschine eine Sensorik zum Messen von Betriebsparametern, und zum Übermitteln dieser Betriebsparameter an die Steuerungseinheit aufweist. Die Betriebsparameter können dabei Abstands- und Richtungsangaben, Untergrundbeschaffenheit, Witterungsbedingungen und / oder Geschwindigkeiten umfassen, die der Steuerungseinheit über geeignete Schnittstellen zur Verarbeitung zur Verfügung gestellt werden.

Die Steuerungseinheit selbst kann dabei einen Datenspeicher zum Aufnehmen der Betriebsparameter, einen Programmspeicher zum Aufnehmen einer Verarbeitungslogik, beispielsweise in Form einer Software, und einen Arbeitsspeicher zum sukzessiven Laden und Ausführen der Verarbeitungslogik mit den Betriebsparametern aufweisen. Auf Basis eines Verarbeitungsergebnisses kann damit grundsätzlich eine automatisierte Steuerung der Arbeitsmaschine unter den spezifischen Gegebenheiten erfolgen.

Bevorzugt ist die Steuerungseinheit dabei ausgebildet, basierend auf den Betriebsparametern und auf Maschinenparametern einen einzuhaltenden Bremsweg der Arbeitsmaschine zu errechnen. Die Maschinenparameter können dabei eine Reichweite der Sensorik zur Hinderniserkennung und eine Bremskraft der Bremssysteme sein, unter deren Zuhilfenahme sich ein einzuhaltender Bremsweg der Arbeitsmaschine berechnen lässt.

Ist die Steuereinheit zudem ausgebildet, das Notbremssignal auszugeben, wenn der einzuhaltende Bremsweg länger als ein von der Sensorik gemessener Abstand zu einem Hindernis im Fahrweg ist, kann zudem ein automatisches sicheres Abbremsen unterhalb einer Kollisionsgrenze mit dem Hindernis erfolgen. Dadurch wird die Arbeitsmaschine vollständig automatisierbar, also ohne Fahrer betreibbar.

In einer weiteren vorteilhaften Ausführungsform der erfindungsgemäßen Arbeitsmaschine kann es allerdings zusätzlich oder alternativ vorgesehen sein, dass die Steuerungseinheit ausgebildet ist, in Ansprechen auf ein fahrerseits ausgelöstes Bremssignal das Notbremssignal auszugeben. Damit wird auch eine vom Fahrer ausgelöste Notbremsung möglich, wenn dieser die Kontrolle über die Arbeitsmaschine hat, entweder in Präsenz oder über Fernzugriff. Grundsätzlich ist es allerdings auch denkbar, die Ausgabe des Notbremssignals an der Steuereinheit zu deaktivieren, wenn die Arbeitsmaschine im regulären Straßenverkehr, beispielsweise zwischen Logistikhöfen unterwegs ist. In diesem Fall würde die Arbeitsmaschine wie üblich über das Betriebsbremssystem abgebremst und über das Parkbremssystem geparkt. Betreibt ein Fahrer die Arbeitsmaschine in Präsenz ist es von Vorteil, wenn das fahrerseits ausgelöste Bremssignal in üblicher Weise durch ein Fußbremspedal erzeugt wird, um kein Umlernen zu erfordern.

Die Erfindung betrifft auch ein Diagnoseverfahren für eine vorstehend beschriebenen Arbeitsmaschine, bei dem die Entlüftungsventile vor Freigabe eines Automatikbetriebs der Arbeitsmaschine einzeln auf Funktionsfähigkeit geprüft werden, indem die Entlüftungsventile aus einem geschlossenen Zustand heraus wechselseitig stromlos geschaltet und bestromt werden, und geprüft wird, ob die wenigstens zwei Parkbremsen in einem entlüfteten Zustand und damit aktivbleiben oder nicht.

Ein wesentlicher Punkt des erfindungsgemäßen Diagnoseverfahrens besteht dabei darin, dass eine Erkennung fehlerhafter Entlüftungsventile, insbesondere vor dem Einschalten des Automatikbetriebs, möglich ist, was die Zuverlässigkeit und damit die Sicherheit der Arbeitsmaschine deutlich erhöht. Denn über die Diagnose der - zudem redundanten - Entlüftungsventile kann eine zuverlässige Verkürzung des Bremswegs der Arbeitsmaschine sichergestellt werden. Im Umkehrschluss wird dadurch wiederum eine erhöhte Fahrgeschwindigkeit möglich, die einen effizienteren Einsatz der Arbeitsmaschine ermöglicht. Zeitgleich mit den Entlüftungsventilen werden damit zudem die Überlastschutzventile auf Funktionsfähigkeit geprüft. Die erfindungsgemäße Schrittfolge des Diagnoseverfahrens, bei dem die Entlüftungsventile aus einem geschlossenen Zustand heraus wechselseitig geschaltet bestromt und stromlos geschaltet werden, spart zudem Zeit und Luft und reduziert Kompressorlaufzeiten.

### Bevorzugte Ausführungsformen des erfindungsgemäßen Diagnoseverfahrens

Bevorzugte Ausführungsformen des erfindungsgemäßen Diagnoseverfahrens sind in den Unteransprüchen dargestellt.

In einer bevorzugten Ausführungsform des erfindungsgemäßen Diagnoseverfahrens wird eine Prüfung des Zustands der wenigstens zwei Parkbremsen über diesen zugordnete Druckschalter oder Druckmessdosen durchgeführt, was den zur Diagnose erforderlichen Luftverbrauch und damit erforderliche Kompressorlaufzeiten minimiert.

Bevorzugt ist es bei der vorstehenden Ausführungsform insbesondere, wenn das Diagnoseverfahren nach dem Aufladen der Arbeitsmaschine, insbesondere in regelmäßigen Abständen von 10 bis 14 Stunden, durchgeführt wird. Dadurch kann die Überprüfung der Entlüftungsventile ohne Einsatzzeitverlust der Arbeitsmaschine beim Einschalten des Automatikbetriebs durchgeführt werden.

Auf Grund ihrer wahlweisen Betreibbarkeit mit oder ohne Fahrer, also im Logistikhofverkehr oder im Straßenverkehr, wird die erfindungsgemäße Arbeitsmaschine in bevorzugter Art und Weise zum Transport von Wechselbrücken auf und / oder zwischen Logistikhöfen verwendet. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

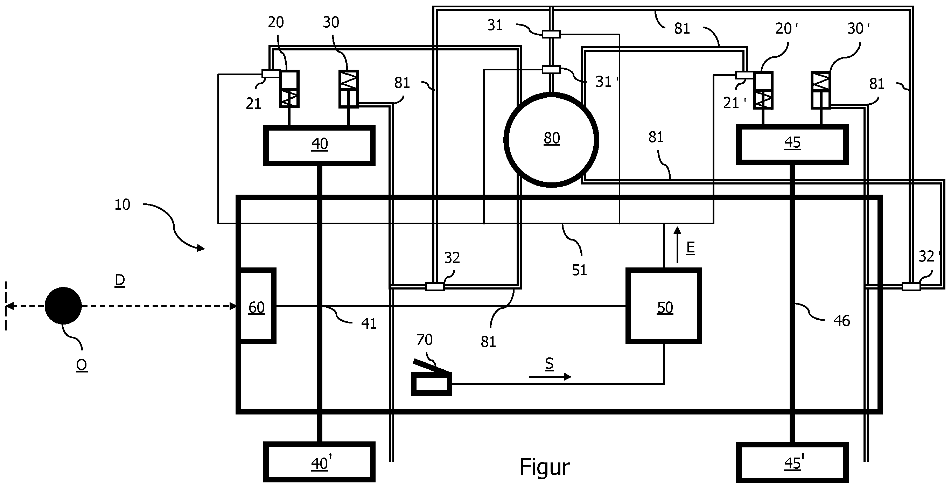

### Kurze Beschreibung der Figur

Im Folgenden wird eine erfindungsgemäße Arbeitsmaschine anhand der beiliegenden Figur näher erläutert. Dabei bezeichnen gleiche Bezugszeichen gleiche oder funktional gleiche Bauteile.

Die einzige Figur zeigt eine schematische Funktionsansicht einer Arbeitsmaschine 10, hier eines Flurförderfahrzeugs, das den maximal möglichen Bremsweg durch Nutzung aller gebremsten Achsen erreichen soll. Außerdem sollen die Anforderungen der vorstehend genannten Normen und somit ein PL d erreicht werden.

Um einen optimalen Bremsweg zu erreichen, können alle verfügbaren Bremsen, hier druckluftbetriebene Betriebsbremsen 20, 20' und federspeicherbetriebene Parkbremsen 30, 30' an den Achsen, hier einer Vorderachse 41 und einer Hinterachse 46, aktiviert werden. Der zu erreichende Bremsweg ist dabei der Bremsweg, der unter Einsatz der federspeicherbetriebenen Parkbremsen 30, 30' erreicht werden kann. Der zeitgleiche Einsatz beider Bremssysteme, also der druckluftbetriebenen Betriebsbremsen 20, 20' und der federspeicherbetriebenen Parkbremsen 30, 30', würde den Bremsweg nur unwesentlich ändern. Eine zeitgleiche Aktivierung der Betriebsbremsen 20, 20' und Parkbremsen 30, 30' an Rädern 40, 40' der Vorderachse 41 und Rädern 45, 45' der Hinterachse 46 sollte idealerweise so erfolgen, dass dies aufgrund einer Kräfteaddition nicht zur Zerstörung der Radbremsen führt.

Dazu sind achsweise zugeordnete Überlastschutzventile 32, 32' vorgesehen, die von Entlüftungsventilen 31, 31' pneumatisch so ansteuerbar sind, dass eine maximal zulässige Bremskraft pro Rad 40, 40', 45, 45' nicht überschritten wird. Die Überlastschutzventile 32, 32' reduzieren dabei die Bremskraft um den Anteil, den die druckluftbetriebenen Betriebsbremsen 20, 20' aufbringen. Ein solcher Effekt könnte alternativ auch durch ein Wechselventil erzielt werden, das die Bremskraft zwischen druckluftbetriebenen Betriebsbremsen 20, 20' und federspeicherbetriebenen Parkbremsen 30, 30' ausgleicht. Das Flurförderzeug 10 kann dabei an allen gebremsten Achsen, hier also der Vorderachse 41 und der Hinterachse 46, mit kombinierten Bremszylindern ausgestattet werden. In der vorliegenden Ausführungsform eines Flurförderfahrzeugs 10 sind diese aus Gründen der besseren Erkennbarkeit einzeln gezeigt.

Wird nun beispielsweise eine Person O (Object) durch eine Sensorik 60 des Flurförderfahrzeugs 10 erkannt, werden alle Federspeicher der Parkbremsen 30, 30' durch die redundant ausgeführten, von einer Steuereinheit 50 über eine elektrische Leitung 51 angesteuerten Entlüftungsventile 31, 31' elektromagnetisch betätigt entlüftet und alle Radbremsen aktiviert. Gleiches gilt für die Betriebsbremsen 20, 30, die jedoch in einem separaten Druckkreis pneumatisch belüftet werden. All dies gilt spiegelbildlich für die gesamte gegenüberliegende (in der Figur untere Seite) des Flurförderfahrzeugs, dem entsprechend angeordnete und (fluidisch wie elektrisch) gekoppelte Bremssysteme zugeordnet sind, die sich aus dem Druckbehälter 80 oder einem zusätzlichen, diesem gegenüberliegenden Druckbehälter speisen, was hier aber alles der Übersichtlichkeit halber nicht gezeigt ist.

Die Steuereinheit 50 selbst ist mit der Sensorik 60 verbunden und zur Aufnahme und Verarbeitung der von der Sensorik 60 erkannten Betriebsparameter mittels einer Verarbeitungslogik ausgebildet. Auf Basis der Betriebsparameter wie Abstands- und Richtungsangabe der Person O, von Untergrundbeschaffenheit, Witterungsbedingungen und / oder Geschwindigkeiten, und unter Hinzuziehung von Maschinenparametern wie einer Reichweite der Sensorik zur Hinderniserkennung und einer Bremskraft der Bremssysteme wird ein unter den spezifischen Gegebenheiten einzuhaltender Bremsweg D (Distance) errechnet und mit der aktuellen Distanz zur Person O verglichen. Ist diese Distanz kleiner als der einzuhaltende Bremsweg, löst die Steuereinheit 50 ein Notbremssignal E (Emergency) aus, das über die elektrische Leitung 51 an Belüftungsventile 21, 21' der Betriebsbremsen 20, 20' und die Entlüftungsventile 31, 31' der Parkbremsen 30, 30' zur Belüftung bzw. Entlüftung der zugehörigen Betriebsbremsen 20, 20' bzw. Parkbremsen 30, 30' bereitgestellt wird. Grundsätzlich kann das Notbremssignal E auch über jedes andere geeignete Kommunikationssystem für die Vernetzung von Funktionskomponenten in dem Flurförderfahrzeug 10 bereitgestellt werden, insbesondere auch durch eine direkte Verkabelung der Belüftungsventile 21, 21' und Entlüftungsventile 31, 31' mit der Steuerungseinheit 50. Das Notbremssignal E kann alternativ oder zusätzlich auch durch ein Bremssignal S (Stop) eines Fußbremspedals 70 ausgelöst werden, das an die Steuereinheit 50 weitergeleitet wird und diese veranlasst, eine Notbremsung zu kommunizieren. Dies kann dann der Fall sein, wenn ein Fahrer des Flurförderfahrzeugs 10 das Fußbremspedal beispielsweise über eine vorbestimmte Pedalstellung hinaus durchtritt oder über eine vorbestimmte Bedienkraft hinaus betätigt. Damit wird es auch einem Fahrer des Flurförderfahrzeugs 10 möglich, nach seiner Einschätzung einer Gefahrenlage in den Betrieb des Flurförderfahrzeugs 10 einzugreifen.

Nach erfolgter Entlüftung der Parkbremsen 30, 30' und - zwar nicht zwingend erforderlicher, aber zusätzlich möglicher - Belüftung der Betriebsbremsen 20, 20' wird die maximal mögliche Bremskraft des Flurförderzeugs 10 unter Berücksichtigung der über die Sensorik 60 erfassten Umgebungsbedingungen erreicht. Eine Reduzierung der Bremskraft infolge von Druckschwankungen, Leckagen oder defekte Bremsschläuche ist mit dieser Methode weitestgehend ausgeschlossen. Das Flurförderfahrzeug 10 bleibt bis zur Deaktivierung durch Belüftung der Federspeicher der Parkbremsen 30, 30' in einem sicheren Zustand und kann nicht nach einer gewissen Zeit unkontrolliert wegrollen wie bei einer Bremsung allein über die Betriebsbremsen 20, 20'.

Federspeichersysteme gelten zudem als ausfallsicher, da die Bremskraft mechanisch über eine Feder und somit unabhängig von einem anderen Energieträger (Luft, Elektrizität oder Hydraulik) aufgebracht wird. Es müssen deshalb keine weiteren Bauteile betrachtet werden, welche eine Reduzierung der Bremskraft zur Folge hätten. Bei dieser Lösung kann vorausgesetzt werden, dass der Bremsweg, mit Ausnahme von äußeren Einflüssen wie Regen, Eis, Schnee usw. nahezu gleich ist. Die Geschwindigkeit des Flurförderfahrzeugs 10 kann sich deshalb zuverlässig an der maximalen Bremskraft orientieren. Eine Betriebsbremse 20, 20' für feinfühliges Bremsen im manuellen und funktional automatisierten Bereich, einschließlich der Regelfunktionalität des automatischen Bremskraftverstärkers, kann durch den Einsatz von Kombinationszylindern trotzdem verfügbar sein.

Gerade zum sicheren automatisierten Betrieb des Flurförderfahrzeugs ist eine regelmäßige Diagnose der Bremssysteme entscheidend. Jedes Ventil muss dabei vor der Freigabe des Automatikbetriebs einzeln angesteuert und so auf einwandfreie Funktion geprüft werden. Diese Prüfung bzw. Diagnose erfolgt über Druckschalter oder Drucksensoren (nicht dargestellt), die den beiden Entlüftungsventilen 31, 31' zugeordnet sind. Wird beispielsweise das Entlüftungsventil 31 spannungsfrei geschaltet, muss der Federspeicher der Parkbremsen 30, 30' entlüftet werden und aktiv sein; gleiches gilt für das Entlüftungsventil 31'. Umgekehrt muss, wenn beispielsweise das Entlüftungsventil 31' geschaltet (bei 24 Volt) ist, der Federspeicher der Parkbremsen 30, 30' belüftet und nicht aktiv sein.

Die Entlüftungsventile 31, 31' werden dabei in einer bestimmten Reihenfolge wie folgend beschrieben geschaltet.

Beispielsweise kann es vor Betrieb des Flurförderfahrzeugs 10, insbesondere vor Umschaltung auf Automatikbetrieb, sinnvoll sein, ein Diagnoseverfahren für die Notbremsfunktion zu durchlaufen, um eine einwandfreie Funktion jedes Entlüftungsventils 31, 31 zu gewährleisten. Die Prüfung beziehungsweise Diagnose erfolgt über besagte Druckschalter oder Drucksensoren. Bei nicht einwandfreier Funktion wird die Notbremsung aktiviert oder wahlweise der Antrieb des Flurförderfahrzeugs 10 deaktiviert.

Im Einzelnen stellt sich die Reihenfolge des Tests nach Anwahl der Betriebsart Automatik so dar:
Entlüftungsventil 31 unbestromt
Entlüftungsventil 31' unbestromt
wobei geprüft wird, ob die Druckschalter beide geschlossen sind und daraus gefolgert werden kann, dass die Parkbremsen 30, 30' aktiviert sind. Es folgt
Entlüftungsventil 31 bestromt
Entlüftungsventil 31' unbestromt
wobei geprüft wird, ob die Druckschalter beide geschlossen sind und daraus gefolgert werden kann, dass die Parkbremsen 30, 30' aktiviert bleiben. Nun folgt
Entlüftungsventil 31 unbestromt
Entlüftungsventil 31' unbestromt
wobei geprüft wird, ob die Druckschalter beide geschlossen sind und daraus gefolgert werden kann, dass die Parkbremsen 30, 30' aktiviert bleiben. Schließlich folgt
Entlüftungsventil 31 unbestromt
Entlüftungsventil 31' bestromt
wobei geprüft wird, ob die Druckschalter beide geschlossen sind und daraus gefolgert werden kann, dass die Parkbremsen 30, 30' aktiviert bleiben.

Bleiben die Druckschalter in jedem der vorstehenden Schritte tatsächlich geschlossen, kann der Automatikbetrieb freigegeben werden. Im Automatikbetrieb sind dann bei gelösten Parkbremsen 30, 30' beide Entlüftungsventile 31, 31' bestromt und beide Druckschalter geöffnet. Bei einem erkannten Fehler ist der Antrieb des Flurförderfahrzeugs 10 zu deaktivieren oder die Parkbremse einzulegen.

Bei einer Abweichung von diesem Verhalten ist von einem defekten Bauteil auszugehen. Diese Prüfung findet idealerweise zirka alle 12 Betriebsstunden (Ladezyklus) statt, da das Flurförderfahrzeug 10 regelmäßig geladen werden muss und der Automatikbetrieb dann beendet wird und anschließend neu zu starten ist. Gleichzeitig werden die Überlastschutzventile 32, 32' mit dieser Diagnosefunktion auf Funktionsfähigkeit geprüft.

### Bezugszeichenliste

- 10: Flurförderfahrzeug
- 20: Betriebsbremse Vorderachse
- 20': Betriebsbremse Hinterachse
- 21: Belüftungsventil Betriebsbremse Vorderachse
- 21': Belüftungsventil Betriebsbremse Hinterachse
- 30: Parkbremse Vorderachse
- 30': Parkbremse Hinterachse
- 31: Entlüftungsventil Parkbremse Vorderachse
- 31': Entlüftungsventil Parkbremse Hinterachse
- 32: Überlastschutzventil Parkbremse Vorderachse
- 32': Überlastschutzventil Parkbremse Hinterachse
- 40, 40': Räder Vorderachse
- 41: Vorderachse
- 45, 45': Räder Hinterachse
- 46: Hinterachse
- 50: Steuerungseinheit
- 51: Elektrische Leitung
- 60: Sensorik
- 70: Fußbremspedal
- 80: Druckbehälter
- 81: Druckleitungen
- D: Bremsweg
- E: Notbremssignal
- O: Hindernis
- S: Bremssignal

## Patentansprüche

1. Arbeitsmaschine, insbesondere Flurförderfahrzeug (10), mit mindestens zwei druckluftbetriebenen Betriebsbremsen (20, 20') und mindestens zwei federspeicherbetriebenen Parkbremsen (30, 30'),
**dadurch gekennzeichnet, dass** die Betriebs- und Parkbremsen (20, 20', 30, 30') wenigstens an Rädern (40, 40') einer Vorderachse (41) der Arbeitsmaschine angebracht sind, und die Betriebs- und Parkbremsen (20, 20', 30, 30') in Ansprechen auf ein Notbremssignal (E) einer Steuerungseinheit (50) der Arbeitsmaschine auslösbar sind, wobei die mindestens zwei Parkbremsen (30, 30') über jeweils wenigstens zwei fluidisch in Reihe geschaltete Entlüftungsventile (31, 31') drucklos schaltbar sind.

2. Arbeitsmaschine nach Anspruch 1, mit wenigstens einem achsweisen Überlastschutzventil (32, 32') zur direkten Entlüftung der mindestens zwei Parkbremsen (30, 30'), das bei Ansteuerung durch die Entlüftungsventile (31, 31') verhindert, dass eine maximal zulässige Bremskraft pro Rad (40, 40') überschritten wird.

3. Arbeitsmaschine nach einem der vorstehenden Ansprüche, mit einer Sensorik (60) zum Messen von Betriebsparametern, und zum Übermitteln dieser Betriebsparameter an die Steuerungseinheit.

4. Arbeitsmaschine nach Anspruch 3, bei dem die Steuerungseinheit (60) ausgebildet ist, basierend auf den Betriebsparametern und auf Maschinenparametern einen einzuhaltenden Bremsweg (D) der Arbeitsmaschine zu errechnen.

5. Arbeitsmaschine nach Ansprüchen 3 oder 4, bei dem die Steuerungseinheit (60) ausgebildet ist, das Notbremssignal (E) auszugeben, wenn der einzuhaltende Bremsweg (D) länger als ein von der Sensorik gemessener Abstand zu einem Hindernis (O) im Fahrweg ist.

6. Arbeitsmaschine nach einem der vorstehenden Ansprüche, bei der die Steuerungseinheit (60) ausgebildet ist, in Ansprechen auf ein fahrerseits ausgelöstes Bremssignal (S) das Notbremssignal (E) auszugeben.

7. Arbeitsmaschine nach Anspruch 6, bei der das fahrerseits ausgelöste Bremssignal (S) durch ein Fußbremspedal (70) erzeugt wird.

8. Diagnoseverfahren für eine Arbeitsmaschine nach einem der vorstehenden Ansprüche, bei dem die Entlüftungsventile (31, 31', vor Freigabe eines Automatikbetriebs der Arbeitsmaschine einzeln auf Funktionsfähigkeit geprüft werden, indem die Entlüftungsventile (31, 31') aus einem jeweils geschlossenen Zustand heraus wechselseitig stromlos geschaltet und bestromt werden, und geprüft wird, ob die wenigstens zwei Parkbremsen (30, 30') in einem entlüfteten Zustand und damit aktivbleiben oder nicht.

9. Diagnoseverfahren für eine Arbeitsmaschine nach Anspruch 8, bei der eine Prüfung des Zustands der wenigstens zwei Parkbremsen (30, 30') über den Parkbremsen zugeordneten Druckschalter oder Druckmessdosen durchgeführt wird.

10. Diagnoseverfahren für eine Arbeitsmaschine nach Anspruch 8 oder 9, bei dem das Diagnoseverfahren beim Aufladen der Arbeitsmaschine, insbesondere in regelmäßigen Abständen von 10 bis 14 Stunden, durchgeführt wird.

11. Verwendung einer Arbeitsmaschine gemäß einem der Ansprüche 1 bis 8 zum Transport von Wechselbrücken auf und / oder zwischen Logistikhöfen.

## Claims

1. Working machine, in particular an industrial truck (10), having at least two compressed-air-operated service brakes (20, 20') and at least two spring-mechanism-operated parking brakes (30, 30'), **characterised in that** the service and parking brakes (20, 20', 30, 30') are at least fitted to wheels (40, 40') of a front axle (41) of the working machine, and the service and parking brakes (20, 20', 30, 30') can be actuated in response to an emergency brake signal (E) of a control unit (50) of the working machine, wherein the at least two parking brakes (30, 30') can be switched into a pressure-free state by means of at least two vent valves (31, 31') which are fluidically connected in series.

2. Working machine according to claim 1, having at least one axle overload protection valve (32, 32') for direct venting of the at least two parking brakes (30, 30'), which, when controlled by the vent valves (31, 31'), prevents a maximum permissible brake force per wheel (40, 40') being exceeded.

3. Working machine according to either of the preceding claims, having a sensor system (60) for measuring operating parameters and for transmitting these operating parameters to the control unit.

4. Working machine according to claim 3, in which the control unit (60) is constructed, on the basis of the operating parameters and on machine parameters, to calculate a brake path (D) of the working machine which is intended to be complied with.

5. Working machine according to claim 3 or 4, in which the control unit (60) is constructed to output the emergency brake signal (E) when the brake path (D) which is intended to be complied with is longer than a spacing, which is measured by the sensor system, from an obstacle (O) in the travel path.

6. Working machine according to any one of the preceding claims, in which the control unit (60) is constructed to output the emergency brake signal (E) in response to a brake signal (S) which is actuated by the driver.

7. Working machine according to claim 6, in which the brake signal (S) which is actuated by the driver is produced by a foot brake pedal.

8. Diagnostic method for a working machine according to any one of the preceding claims, in which the vent valves (31, 31') before automatic operation of the working machine is released are examined individually for functionality by the vent valves (31, 31') being switched from a closed state alternately into a powerless state and a state supplied with power and it being tested whether or not the at least two parking brakes (30, 30') are in a vented state and consequently remain active.

9. Diagnostic method for a working machine according to claim 8, in which a verification of the state of the at least two parking brakes (30, 30') is carried out via pressure switches or pressure cells which are associated with the parking brakes.

10. Diagnostic method for a working machine according to claim 8 or 9, in which the diagnostic method is carried out when the working machine is charged, in particular at regular intervals of from 10 to 14 hours.

11. Use of a working machine according to any one of claims 1 to 8 for transporting swap bodies on and/or between logistics yards.

## Revendications

1. Machine de travail, en particulier chariot élévateur (10), équipée d'au moins deux freins de service à air comprimé (20, 20') et d'au moins deux freins de stationnement activés par accumulateur à ressort (30, 30'), **caractérisée en ce que** les freins de service et de stationnement (20, 20', 30, 30') sont apposés au moins sur les roues (40, 40') d'un essieu avant (41) de la machine de travail, et les freins de service et de stationnement (20, 20', 30, 30') peuvent être déclenchés en réponse à un signal de freinage d'urgence (E) d'une unité de commande (50) de la machine de travail, les deux freins de stationnement (30, 30') au moins pouvant être commutés via au moins deux soupapes d'échappement montées fluidiquement en série (31, 31').

2. Machine de travail selon la revendication 1 comportant au moins une soupape de protection contre les surcharges au niveau des essieux (32, 32') pour l'échappement direct des deux freins de stationnement (30, 30') au moins qui, lorsqu'elle est activée par les soupapes d'échappement (31, 31'), empêche le dépassement d'une force de freinage maximale admissible pour chaque roue (40, 40').

3. Machine de travail selon l'une des revendications précédentes, dotée d'un système de capteurs (60) pour mesurer les paramètres de fonctionnement et pour transmettre ces paramètres de fonctionnement à l'unité de commande.

4. Machine de travail selon la revendication 3, dans laquelle l'unité de commande (60) est conçue pour calculer une distance de freinage (D) de la machine de travail à maintenir sur la base des paramètres de fonctionnement et des paramètres de la machine.

5. Machine de travail selon la revendication 3 ou 4, dans laquelle l'unité de commande (60) est conçue pour émettre le signal de freinage d'urgence (E) si la distance de freinage (D) à maintenir est supérieure à une distance par rapport à un obstacle (O) sur le trajet mesurée par le système de capteurs.

6. Machine de travail selon l'une des revendications précédentes, dans laquelle l'unité de commande (60) est conçue pour émettre le signal de freinage d'urgence (E) en réponse à un signal de freinage (S) déclenché côté conducteur.

7. Machine de travail selon la revendication 6, dans laquelle le signal de freinage (S) déclenché côté conducteur est généré par une pédale de frein (70).

8. Procédé de diagnostic pour une machine de travail selon l'une des revendications précédentes, dans lequel le fonctionnement des soupapes d'échappement (31, 31') est contrôlé individuellement avant que le fonctionnement automatique de la machine de travail ne soit activé, les soupapes d'échappement (31, 31') étant alternativement mises sous tension et hors tension à partir d'un état fermé et dans lequel il est vérifié si les deux freins de stationnement (30, 30') au moins restent dans un état totalement désaéré et donc actifs ou non.

9. Procédé de diagnostic pour une machine de travail selon la revendication 8, dans lequel un contrôle de l'état des deux freins de stationnement (30, 30') au moins est effectué à l'aide de pressostats ou de capteurs de pression affectés aux freins de stationnement.

10. Procédé de diagnostic d'une machine de travail selon la revendication 8 ou 9, dans lequel le procédé de diagnostic est effectué lorsque la machine de travail est en charge, en particulier à intervalles réguliers de 10 à 14 heures.

11. Utilisation d'une machine de travail selon l'une des revendications 1 à 8 pour le transport de caisses mobiles sur et/ou entre des chantiers logistiques.
